# FASCICULE DE BREVET EUROPEEN

(11) **EP 2 808 595 B1**
(45) Date de publication et mention de la délivrance du brevet: **21.11.2018**
(21) Numéro de dépôt: 13169374.9
(22) Date de dépôt: 27.05.2013
(51) Int. Cl.: F16N 19/00, B65D 25/00, B21D 51/10, B21D 51/18, F01D 25/18

(54) **Réservoir et procédé pour sa fabrication**
Behälter und sein Herstellungsverfahren
Container and method for its manufacture

(43) Date de publication de la demande: 03.12.2014
(73) Titulaire: Safran Aero Boosters SA, 4041 Herstal (BE)
(72) Inventeur: Cornet, Albert, 4800 Verviers (BE); Bougelet, Stéphane, 5100 Jambes (BE)
(74) Mandataire: Lecomte & Partners

(56) Documents cités:
- WO-A1-2005/015074
- US-A- 2 038 420
- US-A- 5 697 511
- US-A1- 2011 052 932

## Description

### Objet de l'invention

La présente invention se rapporte à un procédé de fabrication d'un réservoir. La présente invention se rapporte également à un réservoir pour fluide conçu plus particulièrement pour être disposé dans un environnement de taille réduite. Préférentiellement, le réservoir est un réservoir à huile conçu pour être disposé dans une nacelle d'avion dite "slim".

### Etat de la technique

Le réservoir d'huile est un composant du système de lubrification/refroidissement d'un moteur d'avion permettant de récupérer et emmagasiner l'huile du système de lubrification.

Dans une turbomachine à double flux, le réservoir d'huile est disposé entre la nacelle et le carter inter-veine délimitant la veine primaire et la veine secondaire.

De nouvelles nacelles dites "slim" avec un profil optimisé pour réduire la traînée ont vu le jour. Dans ces nacelles, l'espace entre la nacelle et le carter inter-veine est réduit avec pour conséquence que la forme du réservoir doit être adaptée. Actuellement, les réservoirs dans les nacelles dites "slim" sont plats, c'est-à-dire qu'ils sont plus larges que profonds. Ceux-ci sont soit en aluminium et obtenus par fonderie, soit en acier mécano-soudé. Dans les deux cas, les faces principales, c'est-à-dire les faces plates du réservoir, sont maintenues par une multitude de tirants ou plaques de retenue, aussi appelées *baffles*.

Cette géométrie n'est pas favorable à la résistance mécanique du réservoir et requiert en conséquence d'augmenter les épaisseurs du réservoir et/ou le nombre de tirants/baffles afin d'assurer l'intégrité des pièces. Cela a pour effet d'augmenter drastiquement la masse et le coût du réservoir dans les environnements dits "Slim Nacelle".

Les géométries proches du cylindre sont les plus favorables, après la sphère, pour résister à la pression et aux vibrations propres à l'aéronautique. Cependant, les environnements confinés ne permettent pas toujours d'intégrer un réservoir cylindrique d'une seule pièce.

Il est dès lors proposé dans l'état de l'art de réaliser des réservoirs pour "Slim Nacelle" qui comportent deux corps cylindriques. Les réservoirs proposés ont pour désavantage d'être fermés aux extrémités par des dômes réalisés par fonderie avec pour conséquence une augmentation de la masse et du coût associée à la réalisation de pièces par fonderie. Le document WO2005/015074 A1 divulgue un réservoir pour gaz. Le réservoir comprend un corps central avec des compartiments, et des couvercles refermant ses extrémités. Chacun de ces éléments sont soudés bout à bout.

En plus le document US 2011/0052932 A décrit un procédé de fabrication d'un réservoir en alliage d'aluminium à haute résistance.

### Buts de l'invention

La présente invention vise à fournir un réservoir spécialement adapté pour des espaces réduits et présentant une très bonne résistance mécanique de par son design et son procédé d'assemblage.

La présente invention vise en outre à réaliser un réservoir de masse réduite et obtenu par un procédé peu onéreux.

La présente invention vise également à réaliser un réservoir aisément contrôlable par des essais non destructifs.

### Principaux éléments caractéristiques de l'invention

La présente invention se rapporte à un procédé de fabrication d'un réservoir comportant un corps principal muni de plusieurs compartiments, une base fermant le corps principal dans sa partie inférieure et un couvercle fermant le corps principal dans sa partie supérieure, ledit procédé comprenant les étapes suivantes :
- mise en forme de tôles pour réaliser des pièces constitutives du réservoir ;
- assemblage par soudage bout à bout de chacune des pièces constitutives pour réaliser le réservoir.
En plus chaque compartiment du corps principal comporte à chacune de ses extrémités au moins un rebord permettant un assemblage bout à bout entre les compartiments.

Selon des modes particuliers de l'invention, le procédé comporte au moins une ou une combinaison appropriée des caractéristiques suivantes :
- l'assemblage s'effectue exclusivement par soudage bout à bout de chacune des pièces constitutives pour réaliser le réservoir ;
- le réservoir est formé par assemblage de deux ou plus de deux pièces constitutives ;
- lesdites pièces constitutives comportent respectivement le couvercle, chacun des compartiments et la base ;
- lesdites pièces constitutives comportent respectivement le couvercle et deux demi-coquilles intégrant chacune une moitié de la base et une moitié du corps principal ;
- lesdites pièces constitutives comportent respectivement deux demi-coquilles intégrant chacune une moitié du couvercle, une moitié de la base et une moitié du corps principal ;
- lesdites pièces constitutives comportent respectivement la base, le couvercle et une pluralité de morceaux du corps principal.

La présente invention se rapporte également à un réservoir de fluide pour turbomachine, ledit réservoir comportant un corps principal muni de plusieurs compartiments, une base fermant le corps principal dans sa partie inférieure et un couvercle fermant le corps principal dans sa partie supérieure, caractérisé en ce que le corps principal, la base et le couvercle sont essentiellement constitués de tôles, en plus le corps principal est muni de plusieurs compartiments et chaque compartiment comporte à chacune de ses extrémités au moins un rebord permettant un assemblage bout à bout entre les compartiments.

Selon des modes particuliers de l'invention, le réservoir comporte au moins une ou une combinaison appropriée des caractéristiques suivantes :
- ledit réservoir comporte des soudures bout à bout et est dépourvu de soudures d'angle ;
- chaque compartiment comporte à chacune de ses extrémités au moins un rebord qui s'étend dans une direction sensiblement perpendiculaire à l'axe longitudinal du compartiment et met en communication entre eux les compartiments ;
- chaque compartiment comporte une portion de forme cylindrique, de forme proche du cylindre ou de forme ovoïde ;
- la section du compartiment n'est pas constante le long de l'axe longitudinal du compartiment ;
- lesdites tôles sont en acier, en acier inoxydable, en cuivre, en laiton, en aluminium ou en alliage à base d'aluminium ou de cuivre ;
- ledit réservoir est destiné à être disposé entre une nacelle et un carter inter-veine de la turbomachine.

Finalement, la présente invention se rapporte à une turbomachine comportant un réservoir de fluide tel que décrit ci-dessus.

### Brève description des figures

La figure 1 représente des vues schématiques sous différents angles du réservoir selon l'invention disposé dans une turbomachine entre la nacelle et le carter inter-veine.
La figure 2 représente deux vues en plan du réservoir selon l'invention comportant respectivement deux ou trois compartiments de forme sensiblement cylindrique.
La figure 3 représente une vue tridimensionnelle du réservoir selon l'invention comportant deux compartiments.
La figure 4 représente une vue tridimensionnelle de la partie supérieure d'un compartiment de réservoir selon l'invention. Le compartiment est destiné à être positionné à une des extrémités latérales du réservoir.
La figure 5 représente une vue tridimensionnelle de la partie supérieure d'un compartiment de réservoir selon l'invention. Le compartiment est destiné à être placé en position intermédiaire entre les compartiments de la figure 4.
La figure 6 représente une vue tridimensionnelle des différents éléments constitutifs du réservoir réalisé selon un premier mode de réalisation de l'invention.
La figure 7 représente une vue tridimensionnelle des différents éléments constitutifs du réservoir réalisé selon un deuxième mode de réalisation de l'invention.
La figure 8 représente une vue tridimensionnelle des différents éléments constitutifs du réservoir réalisé selon un troisième mode de réalisation de l'invention.
La figure 9 représente une vue tridimensionnelle des différents éléments constitutifs du réservoir réalisé selon un quatrième mode de réalisation de l'invention.

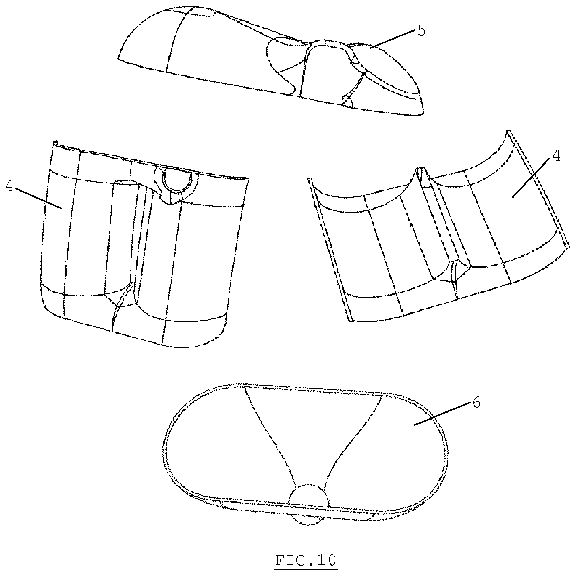

La figure 10 représente une vue tridimensionnelle des différents éléments constitutifs du réservoir réalisé selon un cinquième mode de réalisation de l'invention.

### Légende:

(1) Réservoir
(2) Nacelle
(3) Carter
(4) Corps principal
(5) Dôme, aussi appelé couvercle
(6) Base
(7) Compartiment
(8) Partie saillante, aussi appelée rebord, sur l'extrémité du compartiment.

### Description détaillée de l'invention

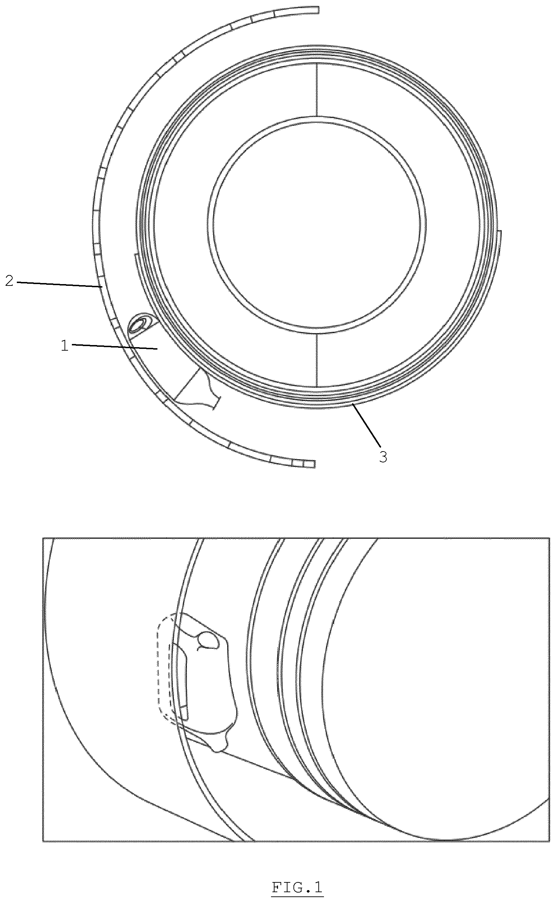

La présente invention se rapporte à un réservoir de fluide conçu plus particulièrement pour être disposé dans un environnement de taille réduite, et à son procédé de fabrication. Préférentiellement, le réservoir 1 selon l'invention est un réservoir d'huile conçu pour être disposé dans une turbomachine entre la nacelle dite "slim" 2 et le carter inter-veine 3 tel que schématisé à la figure 1.

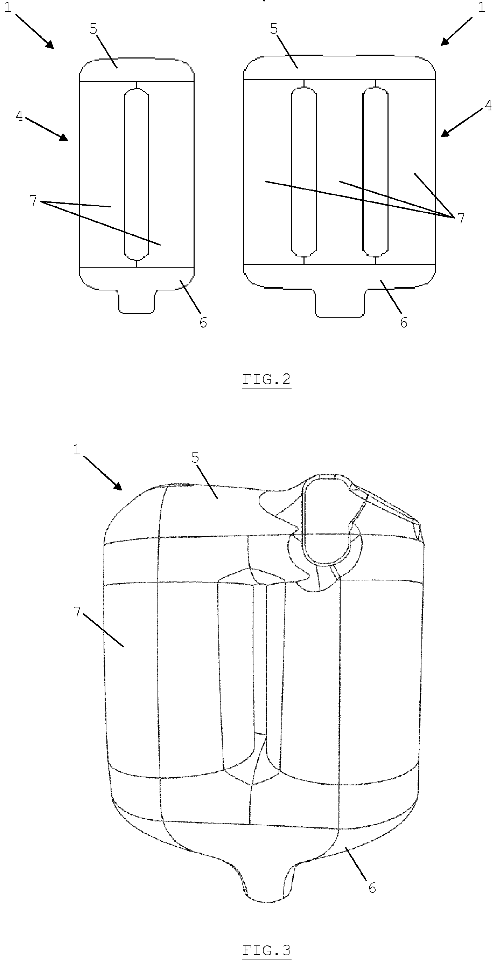

Le réservoir 1 illustré aux figures 2 et 3 comporte un corps principal 4 fermé à ses extrémités respectives par une base 6 et un couvercle 5. Le corps principal 4 comporte des compartiments 7 de forme cylindrique ou proche du cylindre, ou de forme ovoïde. Selon l'invention, la section du compartiment peut être variable le long de l'axe longitudinal du compartiment. On parlera dans ce cas-là de forme proche du cylindre plutôt que de forme cylindrique.

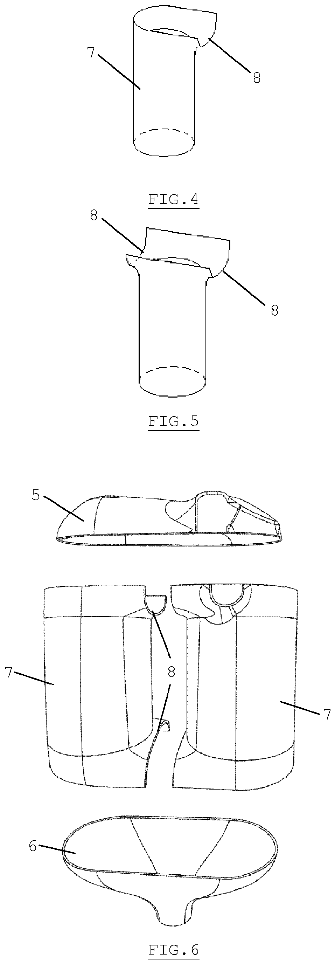

Le corps principal 4 comporte au moins deux compartiments 7. Il peut comporter deux, trois ou plus de compartiments (non représenté) et ce, selon la place disponible et la contenance requise. Les extrémités des compartiments comportent un rebord 8, visible entre autres aux figures 4 et 5, qui s'étend dans une direction sensiblement perpendiculaire à l'axe longitudinal du compartiment et met en communication les compartiments après assemblage. Le rebord peut revêtir toute forme permettant un assemblage bout à bout entre les compartiments du réservoir. Dans une configuration à deux compartiments, chaque extrémité comporte un seul rebord tel que montré à la figure 4. Dans une configuration à plus de deux compartiments, le (ou les) compartiment(s) en position intermédiaire comporte(nt) à chaque extrémité deux rebords tel que montré à la figure 5.

Selon l'invention, l'ensemble du réservoir est réalisé à partir de tôles embouties, ou de manière plus générale mises en forme et/ou découpées, sans avoir recours à des pièces de fonderie ou usinées hors masse. Les éléments constitutifs du réservoir sont mis en forme et/ou découpés de manière à pouvoir être assemblés ensemble par l'intérieur grâce à des soudures bout à bout, ce qui facilite la soudure et assure la contrôlabilité de celles-ci. Préférentiellement, l'assemblage est exclusivement effectué par soudage bout à bout.

Toujours préférentiellement, le réservoir est entièrement réalisé à partir de tôles, par ex. d'acier ou d'alliages d'aluminium. On précisera cependant que le réservoir peut être pourvu de moyens (clapets, etc.) pour l'alimentation et/ou la récupération d'huile et que ces derniers peuvent être réalisés dans d'autres matériaux que des tôles métalliques. Il est donc plus exact dans ce cas de mentionner que le réservoir est essentiellement constitué de tôles.

Le réservoir peut être assemblé à partir d'un nombre variable d'éléments constitutifs. A titre d'exemple non limitatif, le procédé d'assemblage est présenté ci-dessous pour un réservoir comportant deux compartiments.

La figure 6 présente un mode de réalisation de l'invention où le réservoir est assemblé à partir de quatre éléments constitutifs à savoir le couvercle 5, la base 6 et les deux compartiments 7. L'extrémité des compartiments présente une géométrie particulière sous forme de rebord 8 tel que déjà mentionné qui permet d'assembler bout à bout par soudage les deux compartiments.

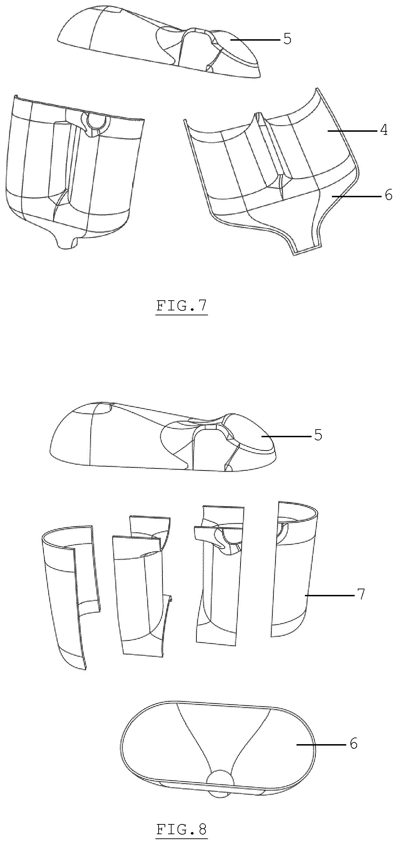

La figure 7 présente un autre mode de réalisation de l'invention où le réservoir est assemblé à partir de trois éléments constitutifs. L'assemblage est composé du couvercle 5 et de deux coques incluant chacune la moitié de la base 6 et du corps principal 4. En variante, les deux coques peuvent également intégrer le couvercle (à raison d'une moitié de celui-ci par coque), l'assemblage est alors réalisé à partir de deux éléments constitutifs (non représenté).

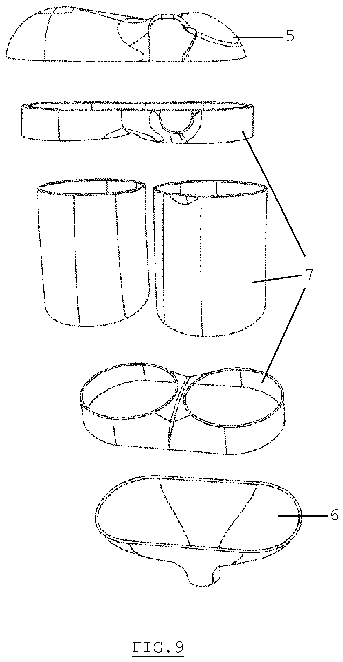

Selon encore un autre mode de réalisation du réservoir selon l'invention, l'assemblage est réalisé à partir de six éléments constitutifs. L'assemblage est composé du couvercle 5, de la base 6 et de quatre morceaux de compartiments 7 tel que montré aux figures 8 et 9.

Il s'agit ici d'une liste non exhaustive d'exemples. On notera de manière générale que le réservoir peut être réalisé à partir d'un nombre quelconque d'éléments constitutifs et que l'objet de l'invention est de mettre en forme/découper les éléments constitutifs réalisés en tôle de manière à ce qu'ils puissent être assemblés par un soudage bout à bout.

La présente invention a été illustrée pour un réservoir de turbomachine mais elle s'étend à toute application où un réservoir doit être disposé dans un espace confiné potentiellement soumis à des vibrations.

### Avantages de l'invention

Le design des éléments constitutifs permet de réaliser un réservoir entièrement à partir de tôles mises en forme/découpées. La suppression de pièces coulées permet ainsi de réduire les difficultés de fabrication ainsi que la masse liées à la fonderie.

Les réservoirs selon l'invention comportant des compartiments de forme sensiblement cylindrique ou ovoïde offrent une meilleure résistance mécanique que les réservoirs plats selon l'état de l'art. En conséquence, les épaisseurs des parois et donc la masse totale peuvent être réduites et, ce, pour une résistance équivalente. A cet égard, la réalisation de réservoir à partir de tôles d'acier permet d'atteindre des épaisseurs très faibles sans augmentation significative du coût par rapport à des pièces obtenues par fonderie qui ont des tolérances de fabrication beaucoup plus élevées. On notera également que le réservoir selon l'invention ne nécessite plus l'utilisation de tirants ou *baffles.*

L'assemblage des éléments constitutifs du réservoir avec des soudures bout à bout présente de nombreux avantages par rapport aux assemblages avec des soudures d'angle. Tout d'abord, le soudage bout à bout est plus aisé à réaliser. Ensuite, les soudures bout à bout sont 100% contrôlables par des contrôles non destructifs, ce qui n'est pas le cas des soudures d'angles. En effet, ces dernières présentent des discontinuités de matière. Dès lors, lors d'un contrôle non destructif, il ne peut être décelé si le défaut détecté provient de la soudure ou de l'assemblage. Un meilleur assemblage et contrôle des soudures bout à bout conduit ainsi à une diminution des défauts et du taux de rebuts. Finalement, les soudures bout à bout sont plus résistantes que des soudures d'angle et éliminent les risques de propagation de fissures à la racine de la soudure.

De par sa forme et son assemblage avec des soudures bout à bout, le réservoir selon l'invention est particulièrement adapté pour un espace confiné soumis à des vibrations tel que dans un moteur d'avion.

L'utilisation d'acier ayant intrinsèquement une bonne résistance au feu a pour avantage qu'il n'est pas nécessaire de placer une protection au feu additionnelle.

## Revendications

1. Procédé de fabrication d'un réservoir (1) comportant un corps principal (4) une base (6) fermant le corps principal (4) dans sa partie inférieure et un couvercle (5) fermant le corps principal (4) dans sa partie supérieure, ledit procédé comprend les étapes suivantes :
- mise en forme de tôles pour réaliser des pièces constitutives du réservoir (1);
- assemblage par soudage bout à bout de chacune des pièces constitutives pour réaliser le réservoir (1),
ledit procédé est **caractérisé en ce que** le corps principal (4) est muni de plusieurs compartiments (7) et **en ce que** chaque compartiment (7) comporte à chacune de ses extrémités au moins un rebord (8) permettant un assemblage bout à bout entre les compartiments (7).

2. Procédé selon la revendication 1, dans lequel l'assemblage s'effectue exclusivement par soudage bout à bout de chacune des pièces constitutives pour réaliser le réservoir (1).

3. Procédé selon la revendication 1 ou 2, dans lequel le réservoir (1) est formé par assemblage de deux ou plus de deux pièces constitutives.

4. Procédé selon l'une quelconque des revendications 1 à 3, dans lequel lesdites pièces constitutives comportent respectivement le couvercle (5), chacun des compartiments (7) et la base (6).

5. Procédé selon l'une quelconque des revendications 1 à 3, dans lequel lesdites pièces constitutives comportent respectivement le couvercle (5) et deux demi-coquilles intégrant chacune une moitié de la base (6) et une moitié du corps principal (4).

6. Procédé selon l'une quelconque des revendications 1 à 3, dans lequel lesdites pièces constitutives comportent respectivement deux demi-coquilles intégrant chacune une moitié du couvercle (5), une moitié de la base (6) et une moitié du corps principal (4).

7. Procédé selon l'une quelconque des revendications 1 à 3, dans lequel lesdites pièces constitutives comportent respectivement la base (6), le couvercle (5) et une pluralité de morceaux du corps principal (4).

8. Réservoir de fluide (1) pour turbomachine obtenu par le procédé selon l'une quelconque des revendications 1 à 7, ledit réservoir (1) comportant un corps principal (4), une base (6) fermant le corps principal (4) dans sa partie inférieure et un couvercle (5) fermant le corps principal (4) dans sa partie supérieure, le corps principal (4), la base (6) et le couvercle (5) sont essentiellement constitués de tôles,
ledit réservoir est **caractérisé en ce que** le corps principal (4) est muni de plusieurs compartiments (7) et **en ce que** chaque compartiment (7) comporte à chacune de ses extrémités au moins un rebord (8) permettant un assemblage bout à bout entre les compartiments (7).

9. Réservoir (1) selon la revendication 8, ledit réservoir (1) comportant des soudures bout à bout et étant dépourvu de soudures d'angle.

10. Réservoir (1) selon l'une quelconque des revendications 8 à 9, dans lequel chaque compartiment (7) comporte une portion de forme cylindrique, de forme proche du cylindre ou de forme ovoïde.

11. Réservoir (1) selon l'une quelconque des revendications 8 à 10, dans lequel la section du compartiment (7) n'est pas constante le long de l'axe longitudinal du compartiment (7).

12. Réservoir (1) selon l'une quelconque des revendications 8 à 11, dans lequel lesdites tôles sont en acier, en acier inoxydable, en cuivre, en laiton, en aluminium ou en alliage à base d'aluminium ou de cuivre.

13. Turbomachine comportant un réservoir de fluide (1) selon l'une quelconque des revendications 8 à 12.

## Patentansprüche

1. Verfahren zur Herstellung eines Behälters (1), umfassend einen Hauptkörper (4), eine Basis (6), die den unteren Teil des Hauptkörpers (4) abschließt, und einen Deckel (5), der den oberen Teil des Hauptkörpers (4) abschließt, wobei das Verfahren die folgenden Schritte umfasst:
- Formen von Blechen zur Herstellung von Bestandteilen des Behälters (1);
- Montieren von jedem der Bestandteile mittels Stumpfschweißen zur Herstellung des Behälters (1),
wobei das Verfahren **dadurch gekennzeichnet ist, dass** der Hauptkörper (4) mit mehreren Kompartimenten (7) versehen ist und dass jedes Kompartiment (7), an jedem seiner Enden, mindestens einen Flansch (8) umfasst, der eine Ende-an-Ende-Montage zwischen den Kompartimenten (7) gestattet.

2. Verfahren nach Anspruch 1, wobei die Montage ausschließlich durch Stumpfschweißen jedes der Bestandteile erzielt wird, um den Behälter (1) herzustellen.

3. Verfahren nach Anspruch 1 oder 2, wobei der Behälter (1) durch die Montage von zwei oder mehr Bestandteilen gebildet wird.

4. Verfahren nach einem der Ansprüche 1 bis 3, wobei die Bestandteile jeweils den Deckel (5), jedes der Kompartimente (7) und die Basis (6) umfassen.

5. Verfahren nach einem der Ansprüche 1 bis 3, wobei die Bestandteile jeweils den Deckel (5) und zwei Halbschalen, die jede eine Hälfte der Basis (6) und eine Hälfte des Hauptkörpers (4) beinhalten, umfassen.

6. Verfahren nach einem der Ansprüche 1 bis 3, wobei die Bestandteile jeweils zwei Halbschalen umfassen, die jede eine Hälfte des Deckels (5), eine Hälfte der Basis (6) und eine Hälfte des Hauptkörpers (4) beinhalten.

7. Verfahren nach einem der Ansprüche 1 bis 3, wobei die Bestandteile jeweils die Basis (6), den Deckel (5) und eine Vielzahl von Stücken des Hauptkörpers (4) umfassen.

8. Fluidbehälter (1) für eine Turbomaschine, erhalten durch das Verfahren nach einem der Ansprüche 1 bis 7, welcher Behälter (1) einen Hauptkörper (4), eine Basis (6), die den unteren Teil des Hauptkörpers (4) abschließt, und einen Deckel (5), der den oberen Teil des Hauptkörpers (4) abschließt, umfasst, wobei der Hauptkörper (4), die Basis (6) und der Deckel (5) im Wesentlichen aus Blechen hergestellt sind,
wobei der Behälter **dadurch gekennzeichnet ist, dass** der Hauptkörper (4) mit mehreren Kompartimenten (7) versehen ist und jedes Kompartiment (7), an jedem seiner Enden, mindestens einen Flansch (8) umfasst, der eine Ende-an-Ende-Montage zwischen den Kompartimenten (7) gestattet.

9. Behälter (1) nach Anspruch 8, wobei der Behälter (1) Stumpfschweißnähte umfasst und frei von jeglichen Kehlnähten ist.

10. Behälter (1) nach einem der Ansprüche 8 bis 9, wobei jedes Kompartiment (7) einen Teil mit einer zylindrischen, nahezu zylindrischen oder eiförmigen Form umfasst.

11. Behälter (1) nach einem der Ansprüche 8 bis 10, wobei der Querschnitt des Kompartiments (7) entlang der Längsachse des Kompartiments (7) nicht konstant ist.

12. Behälter (1) nach einem der Ansprüche 8 bis 11, wobei die Bleche aus Stahl, Edelstahl, Kupfer, Messing, Aluminium oder einer Legierung auf Basis von Aluminium oder Kupfer hergestellt sind.

13. Turbomaschine, umfassend einen Fluidbehälter (1) nach einem der Ansprüche 8 bis 12.

## Claims

1. A method for manufacturing a tank (1) comprising a main body (4), a base (6) closing the lower part of the main body (4), and a cover (5) closing the upper part of the main body (4), said method comprising the following steps:
- shaping sheets to produce component parts making up the tank (1);
- assembling each of the component parts by butt welding in order to produce the tank (1),
the method is **characterized in that** the main body (4) is provided with several compartments (7), and **in that** each compartment (7) comprises, at each of its ends, at least one flange (8) allowing an end-to-end assembly between the compartments (7).

2. The method according to Claim 1, wherein the assembly is exclusively achieved by butt welding each of the component parts to produce the tank (1).

3. The method according to Claim 1 or 2, wherein the tank (1) is formed by the assembly of two or more component parts.

4. The method according to any one of Claims 1 to 3, wherein said component parts respectively comprise the cover (5), each of the compartments (7) and the base (6).

5. The method according to any one of Claims 1 to 3, wherein said component parts respectively comprise the cover (5) and two half-shells each incorporating half of the base (6) and half of the main body (4).

6. The method according to any one of Claims 1 to 3, wherein said component parts respectively comprise two half-shells each incorporating half of the cover (5), half of the base (6) and half of the main body (4).

7. The method according to any one of Claims 1 to 3, wherein said component parts respectively comprise the base (6), the cover (5) and a plurality of pieces of the main body (4).

8. A fluid tank (1) for a turbomachine obtained by the method according to any one of claims 1 to 7, said tank (1) comprising a main body (4), a base (6) closing the lower part of the main body (4), and a cover (5) closing the upper part of the main body (4), wherein the main body (4), the base (6) and the cover (5) are essentially made from sheets,
said tank being **characterized in that** the main body (4) is provided with several compartments (7) and each compartment (7) comprises, at each of its ends, at least one flange (8) allowing an end-to-end assembly between the compartments (7).

9. The tank (1) according to Claim 8, said tank (1) comprising butt welds and being free of any fillet welds.

10. The tank (1) according to one of Claims 8 to 9, wherein each compartment (7) comprises a portion with a cylindrical, nearly cylindrical or ovoid shape.

11. The tank (1) according to any one of Claims 8 to 10, wherein the section of the compartment (7) is not constant along the longitudinal axis of the compartment (7).

12. The tank (1) according to any one of Claims 8 to 11, wherein said sheets are made from steel, stainless steel, copper, brass, aluminum or an aluminum or copper-based alloy.

13. A turbomachine comprising a fluid tank (1) according to any one of Claims 8 to 12.
